# EUROPÄISCHE PATENTSCHRIFT

(11) **EP 1 120 315 B1**
(45) Veröffentlichungstag und Bekanntmachung des Hinweises auf die Patenterteilung: **07.04.2004**
(21) Anmeldenummer: 01100143.5
(22) Anmeldetag: 16.01.2001
(51) Int. Cl.: B60R 11/02

(54) **Modulträgeranordnung für Elektronikbausteine in Kraftfahrzeugen**
Module support arrangement for electronic devices in vehicles
Agencement du support de module pour appareils électroniques dans un véhicule

(30) Priorität: 28.01.2000 DE 10003609
(43) Veröffentlichungstag der Anmeldung: 01.08.2001
(73) Patentinhaber: Volkswagen Aktiengesellschaft, 38436 Wolfsburg (DE)
(72) Erfinder: Schimming, Gregor, 20535 Hamburg (DE); Hakenes, Christoph, 38527 Meine-Abbesbüttel (DE)

(56) Entgegenhaltungen:
- EP-A- 0 716 959
- DE-A- 4 137 304
- DE-A- 4 330 439
- US-A- 5 171 054
- US-A- 5 498 050

## Beschreibung

Die Erfindung betrifft eine Modulträgeranordnung gemäß dem Oberbegriff des Patentanspruchs 1. Unter Elektronikbausteinen sollen in erster Linie Steuergeräte verstanden sein, beispielsweise solche für elektrische Motoren für eine Heckklappe, für Fensterheber, für Telefon und andere Fälle.

Es ist bekannt, derartige Elektronikbausteine in Kraftfahrzeugen dadurch hutablagennah unterzubringen, daß man die Hutablage selber zur Aufnahme der Elektronikbausteine ausbildet. So zeigt die EP 0 716 959 B1 eine aus zwei Halbschalen zusammengesetzte Hutablage, die auf ihrer Unterseite, also der im eingebauten Zustand einem Kofferraum zugekehrten Seite, Vertiefungen zum Einsetzen von Elektronikbausteinen aufweist. Diese Lösung hat zwei Nachteile, nämlich zum einen liegen die Elektronikbausteine ungeschützt gegen Beschädigungen beispielsweise durch sperrige Gepäckstücke und zum anderen fehlt eine Kühlluftführung zu den Elektronikbausteinen.

Auch in der US-PS 5,964,491 wird eine Hutablagenkonstruktion beschrieben, die an ihrer Unterseite Elektronikbausteine in Gestalt von Steuergeräten trägt. Diese Konstruktion weist dieselben Nachteile auf.

Die Hutablage nach der US-PS 5,171,054 schließlich ist nur für die Aufnahme von Lautsprechern und einer dritten Bremsleuchte eingerichtet. Sie soll auch Luftkanäle für die Zufuhr von Frischluft zu den auf der bevor befindlichen Rücksitzbank sitzenden Passagieren enthalten; diese Luftkanäle sind aber im einzelnen nicht erkennbar. Auch hinsichtlich der Unterbringung von Elektronikbausteinen sagt diese Schrift nichts. Die Hutablage ist als Hohlkörper in einem Blasverfahren hergestellt; in diesem Verfahren wird auch ein Filmscharnier in der Hutablage hergestellt, so daß ein vorderer Bereich der Hutablage zwecks Schaffung eines Zugangs zum Kofferraum hochgeschwenkt werden kann.

Die gattungsbildende DE 41 37 304 A1 beschreibt ein System zur Erzeugung eines akustischen Tieffrequenzklangbildes in Kraftfahrzeugen. Dabei ist ein Tieftonlautsprecher in einen klemm- und lösbaren Grundkörper unter einer Hutablage in Richtung der Kofferraums montiert, und vorhandene Öffnungen in der Hutablage lassen die Audiosignale in das Fahrzeuginnere gelangen.

Der Erfindung liegt die Aufgabe zugrunde, eine gattungsgemäße Modulträgeranordnung zu schaffen, die trotz geschützter Lage der Elektronikausteine im in das Fahrzeug eingebauten Zustand eine gute Zugänglichkeit derselben sowie ihre Kühlung sicherstellt.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Ein erstes wesentliches Merkmal der Erfindung, das dem heutigen Trend zur Zusammenfassung mehrerer Bauteile zu einem einzigen widerspricht, ist darin zu sehen, daß die Modulträgeranordnung einen Modulträger enthält, der nicht Bestandteil einer Hutablage ist, die vielmehr zusätzlich zu dem Modulträger vorhanden ist. Der Modulträger ist zur Befestigung an Teilen des Rohbaus (hinterer Sitzquerträger, hinterer Scheibenquerträger bei einem PKW) unabhängig von der Hutablage eingerichtet, wobei die Befestigungsmittel ein leichtes Lösen von der Unterseite des Modulträgers her zulassen. In der Regel befindet sich dort ein Koffer- oder Laderaum, und die Befestigung des Modulträgers kann von diesem Raum her gelöst werden. Dann sind auch die Elektronikbausteine zugänglich, obwohl diese auf der im eingebauten Zustand oberen Seite des Modulträgers festgelegt sind.

Durch Sicherstellung eines Zwischenraums zwischen Hutablage und Modulträger sowie durch Vorsehen von Lüftungsöffnungen in beiden in definierten Relativlagen wird eine Luftdurchströmung des Zwischenraums und damit eine Kühlluftströmung zumindest für thermisch hoch beanspruchte Elektronikbausteine sichergestellt. Diese Kühlluftströmung bildet einen Bestandteil der Frischluftdurchströmung des Fahrzeugraums, da die Luft aus dem hinteren Bereich des Fahrzeugraums abgesaugt und durch Öffnungen beispielsweise im Bereich hinterer Radhäuser aus dem Fahrzeuginnenraum oder genauer: aus dem Kofferraum ins Freie gefördert wird.

Die Anordnung der Steuergeräte in dem besagten Zwischenraum gestattet auch eine sehr einfache, praktisch plattenartige Formgebung für den Modulträger, zumal die Unterbringung der Elektronikbausteine in versenkten Aufnahmen des Modulträgers hinsichtlich ihrer Kühlung durch die Kühlluftströmung im Zwischenraum sogar nachteilig sein kann. Zusatzeinrichtungen wie eine erhöht angebrachte dritte Bremsleuchte und Lautsprecher wird man auf oder in der Hutablage unterbringen. Die Herstellung elektrischer Verbindungen zwischen den Elektronikbausteinen einerseits und fahrzeugseitigen elektrisch betätigbaren Einrichtungen andererseits erfolgt zweckmäßigerweise durch Steckverbindungen, so daß nach Lösen dieser Steckverbindungen und nach Lösen der Befestigungen für den Modulträger die gesamte Modulträgeranordnung vom Fahrzeug gelöst ist. Umgekehrt stellt die Modulträgeranordnung einen Vormontagemodul dar, der, bestückt mit den Elektronikbausteinen, in das Fahrzeug eingebaut werden kann.

Ein Ausführungsbeispiel der Erfindung für einen Personenkraftwagen wird im folgenden anhand der Zeichnung erläutert, deren Figuren Längsschnitte durch den hinteren Fahrzeugbereich in verschiedenen Schnittebenen wiedergeben.

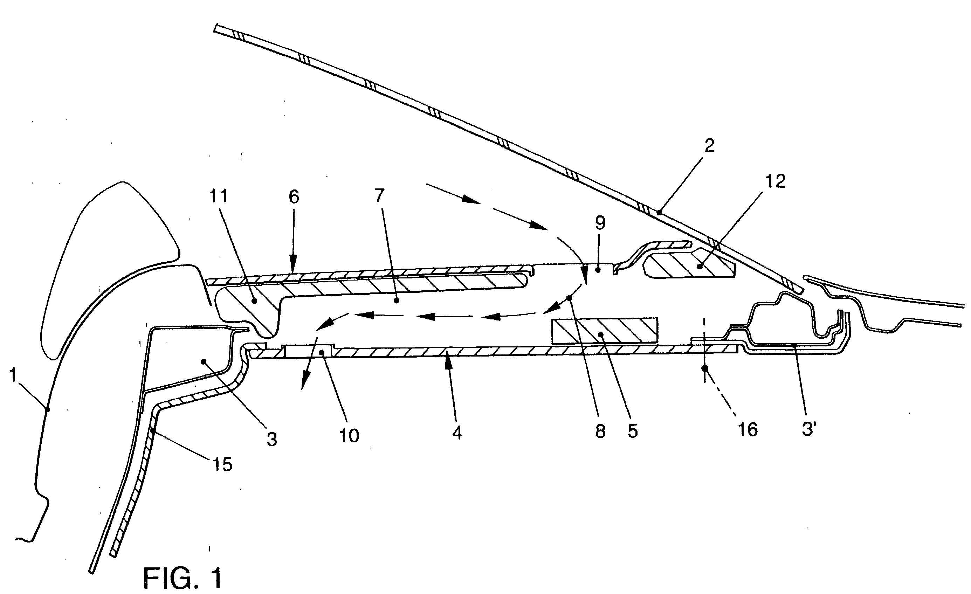

Betrachtet man zunächst Figur 1, so erkennt man von dem eigentlichen Fahrzeug hinter der hinteren Sitzanlage 1 (Hintersitzbank mit Nackenstützen) und unter der Heckscheibe 2 den hinteren Sitzquerträger 3 und den Scheibenquerträger 3'; diese Rohbauteile spielen eine Rolle bei der Festlegung des plattenförmigen Modulträgers 4 mit den auf seiner Oberseite festgelegten Elektronikbausteinen (Steuergeräten) 5 unterhalb der Hutablage 6. Zwischen Modulträger 4 und Hutablage 6 befindet sich der Zwischenraum 7, der von einer durch den Pfeil 8 angedeuteten Kühlluftströmung für thermisch hoch belastete Elektronikbausteine 5 durchsetzt ist. Diese strömt in den Zwischenraum 7 durch in einem hinteren Bereich der Hutablage 6 vorgesehene Lüftungslöcher 9 ein und verläßt ihn in Richtung Kofferraum durch im Modulträger 4 in einem vorderen Bereich vorgesehene Luftaustrittsöffnungen 10. Die relative Lage der Öffnungen 9 und 10 ist also so gewählt, daß die Luftströmung 8 an kühlungsbedürftigen Elektronikbausteinen 5 verläuft.

Insbesondere durch die Luftströmung 8, aber auch durch Erschütterung der Hutablage 6 besteht an sich die Gefahr der Entstehung von störenden Geräuschen. Dem wirkt die akustische Dämpfung 11 entgegen, die den Zwischenraum 7 insbesondere an Stellenbegrenzt, an denen eine Umlenkung der Luftströmung 8 erfolgt.

Der Modulträger bildet mit den Elektronikbausteinen 5 nach Aufhebung von Befestigungen an den Rohbauteilen 3 und 3' und nach Aufheben elektrischer Steckverbindungen eine Montageeinheit, die als solche aus dem Fahrzeug herausgenommen bzw. in dieses eingesetzt werden kann. Die Tatsache der völligen Unabhängigkeit des Modulträgers mit den Steuergeräten von der Hutablage 6 wird dadurch unterstrichen, daß die erhöht angeordnete dritte Bremsleuchte 12 in einer Ausbuchtung der Hutablage 6 untergebracht ist.

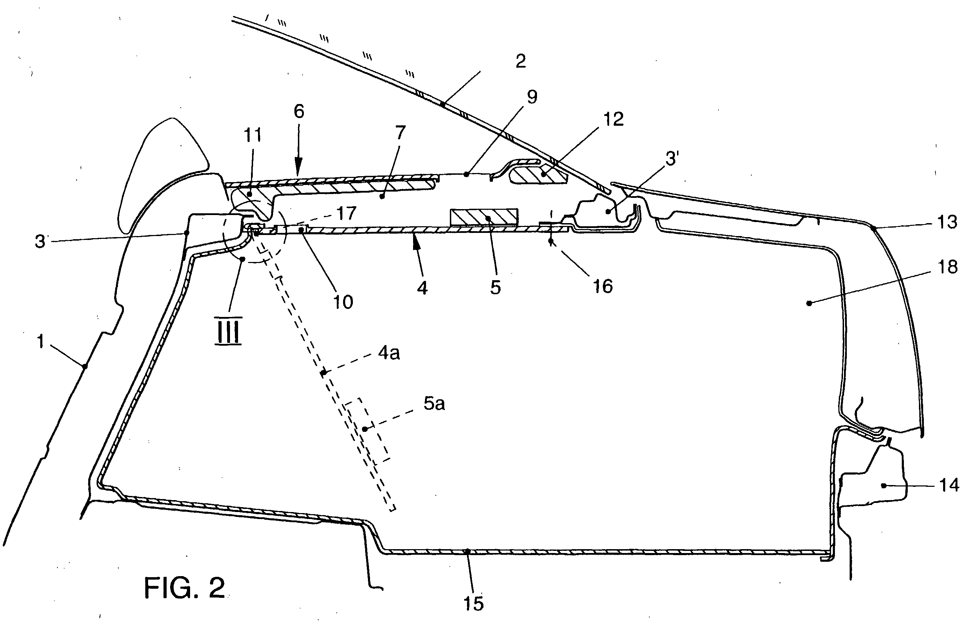

Figur 2 zeigt im kleineren Maßstab einen Längsschnitt durch das gesamte Heckend. Man erkennt die Heckklappe 13 und den Schloßquerträger 14; mit 15 ist eine Kofferraumverkleidung bezeichnet, die mit ihrem vorderen oberen Endbereich auch in Figur 1 erscheint. Figur 2 zeigt deutlich, daß der Modulträger 4 einen Bestandteil dieser Kofferraumverkleidung bildet, wozu er auf seiner nach unten weisenden Seite beispielsweise mit einem Teppichmaterial belegt sein kann. Entsprechendes gilt verständlicherweise für die Ausgestaltung der oberen Seite der Hutablage 6, wobei lediglich dafür gesorgt sein muß, daß die Luftöffnungen 9 und 10 freibleiben. Sie können durch Gitter oder dergleichen abgedeckt sein.

Figur 2 zeigt nun, daß die Befestigungen des Modulträgers 4 so ausgebildet sind, daß nach Lösen von Schraubbefestigungen 16 am hinteren Ende des Modulträgers 4 dieser um eine vordere quer verlaufende Schwenkachse 17 nach unten in eine Position 4a verschwenkt werden kann, in der die Elektronikbausteine in ihrer abgesenkten Position 5a vom Kofferraum 17 her zugänglich sind. Die Konstruktion der die Schwenkachse 17 definierenden vorderen Befestigungen ist aber so getroffen, daß der Modulträger nach Entfernen der Schraubbefestigungen 16 auch vom hinteren Sitzquerträger 3 getrennt und aus dem Fahrzeug herausgenommen werden kann.

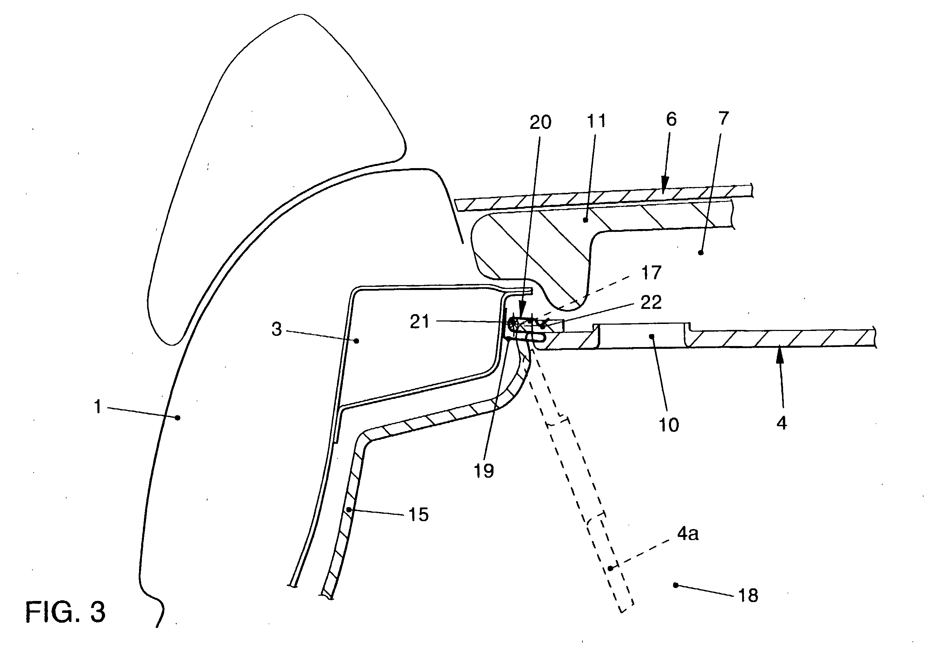

Eine entsprechende Konstruktion der die Schwenkachse 17 definierenden vorderen Befestigungsmittel zeigt Figur 3: Man erkennt die mittels eines mit ihr einstückigen Winkelbereichs 19 am hinteren Sitzquerträger 3 gelagerte U-ähnliche Klammer 20, die nach hinten offen ist und einen Bolzen 21 am Modulträger 4 aufnimmt. Eine Bewegung des Modulträgers 4 in Richtung nach hinten, d.h. in der Figur nach rechts, ist einerseits durch die hinteren Schraubbefestigungen 16 (Figur 2) und andererseits dadurch vermieden, daß die Klammer 20 bei 22 eine Querschnittsverringerung aufweist. Die Klammer 20 besteht verständlicherweise aus Federmaterial. Das Herabschwenken des Modulträgers 4 in seine bei 4a angedeutete abgesenkte Stellung unter Ausnutzung der Schwenkachse 17 ist erst dann möglich, wenn nach Aufheben der Schraubverbindungen 16 der Modulträger 4 aus seiner vordersten Stellung (in Figur 3 ausgezogen gezeichnet) nach hinten in eine hinterste Stellung verschoben ist, in der der Bolzen 21 die Schwenkachse 17 bildet. Danach kann durch weiteres Bewegen des Modulträgers 4 in Richtung nach hinten der Bolzen 21 unter Aufspreizen der Klammer 20 aus dieser herausbewegt und der Modulträger 4 aus dem Fahrzeug herausgenommen werden.

Mit der Erfindung ist also mit einfachen Mitteln eine gattungsgemäße Modulträgeranordnung geschaffen, die trotz geschützter und gekühlter Anordnung der Elektronikbausteine diese mit wenigen Handgriffen zugänglich macht.

## Patentansprüche

1. Modulträgeranordnung zum hutablagenahen Einbau von Elektronikbausteinen (5) oberhalb eines Kraftfahrzeug-Kofferraums (18), wobei ein auf seiner im eingebauten Zustand oberen Seite die Elektronikbausteine (5) tragender, von der Hutablage (6) unabhängiger Modulträger (4) unterhalb der Hutablage (6) unter Bildung eines Zwischenraums (7) befestigbar ist, der mit Lüftungsöffnungen (9, 10) in der Hutablage (6) und dem Modulträger (4) in eine Kühlluftströmung (8) für zumindest einzelne der Elektronikbausteine (5) sicherstellender relativer Lage in Strömungsverbindung steht und Mittel (16; 20, 21) zur lösbaren Befestigung des Modulträgers (4) am Kraftfahrzeug vorgesehen sind, **dadurch gekennzeichnet, daß** der Modulträger (4) plattenartig ausgebildet ist und die Mittel (20, 21) nahe einer Vorderkante des Modulträgers (4) eine querverlaufende Schwenkachse (17) zum Herabschwenken desselben nach Lösen einer aufhebbaren Befestigung (16) nahe einer Hinterkante des Modulträgers (4) definieren.

2. Anordnung nach Anspruch 1, **dadurch gekennzeichnet, daß** die Lüftungsöffnungen (9, 10) in einem hinteren Bereich der Hutablage (6) und einem vorderen Bereich des Modulträgers (4) vorgesehen sind.

3. Anordnung nach Anspruch 1 oder 2, **dadurch gekennzeichnet, daß** Begrenzungen des Zwischenraums (7) mit akustisch dämpfendem Material (11) verkleidet sind.

4. Anordnung nach einem der Ansprüche 1 bis 3, **dadurch gekennzeichnet, daß** der Modulträger (4) zugleich eine obere Kofferraumverkleidung bildet.

5. Anordnung nach einem der Anspruch 1 bis 4, **dadurch gekennzeichnet, daß** die aufhebbare Befestigung von unten zugängliche Schrauben (16) enthält.

6. Anordnung nach Anspruch einem der Ansprüche 1 bis 5, **dadurch gekennzeichnet, daß** die die Schwenkachse (17) definierenden Mittel Querbolzen (21) am Modulträger (4) oder am Rohbau (3) sowie zur Aufnahme derselben ausgelegte, in einer Längsrichtung offene U-ähnliche Klammern (20) am Rohbau (3) bzw. am Modulträger (4) enthalten.

7. Anordnung nach Anspruch 6, **dadurch gekennzeichnet, daß** die Klammern (20) eine nach Verschieben des Modulträgers (4) in eine vordere Endlage wirksame Arretierstellung und eine nach Verschieben des Modulträgers (4) in eine hintere Endlage wirksame Schwenkstellung desselben bildend ausgelegt sind.

## Claims

1. Module support arrangement for installing electronic components (5) in the vicinity of the rear parcel shelf above a motor-vehicle boot (18), it being possible for a module support (4), which supports the electronic components (5) on its upper side in the fitted state and is independent of the rear parcel shelf (6), to be fastened below the rear parcel shelf (6) forming an intermediate space (7), which is connected in terms of flow to ventilation openings (9, 10) in the rear parcel shelf (6) and in the module support (4) in a relative position ensuring a cooling-air flow (8) for at least individual electronic components (5), and means (16; 20, 21) being provided for releasably fastening the module support (4) to the motor vehicle, **characterized in that** the module support (4) is of panel-like design, and the means (20, 21) define, in the vicinity of a front edge of the module support (4), a transversely extending pivot axis (17) for pivoting said module support downwards after release of a fastening (16) which can be undone in the vicinity of a rear edge of the module support (4).

2. Arrangement according to Claim 1, **characterized in that** the ventilation openings (9, 10) are provided in a rear region of the rear parcel shelf (6) and a front region of the module support (4).

3. Arrangement according to Claim 1 or 2, **characterized in that** boundaries of the intermediate space (7) are covered with acoustically damping material (11).

4. Arrangement according to one of Claims 1 to 3, **characterized in that** the module support (4) forms at the same time an upper covering of the boot.

5. Arrangement according to one of Claims 1 to 4, **characterized in that** the fastening which can be undone contains screws (16) which are accessible from below.

6. Arrangement according to one of Claims 1 to 5, **characterized in that** the means defining the pivot axis (17) contain transverse bolts (21) on the module support (4) or on the body shell (3) and U-like clamps (20), which are configured to receive the said transverse bolts and are open in a longitudinal direction, on the body shell (3) or on the module support (4).

7. Arrangement according to Claim 6, **characterized in that** the clamps (20) are configured such that they form a locking position of the module support, which is effective after the module support (4) has been displaced into a front end position, and a pivoting position of the said module support, which is effective after the module support (4) has been displaced into a rear end position.

## Revendications

1. Agencement porte-modules destiné à monter des modules électroniques (5) à proximité de la plage arrière située au-dessus du coffre (18) d'un véhicule automobile, dans lequel un porte-modules (4) qui porte les modules électroniques (5) sur son côté situé dans le haut lorsqu'il est monté et qui est indépendent de la plage arrière peut être fixé en dessous de la plage arrière (6) en formant un espace intermédiaire (7) qui est en communication d'écoulement avec des ouvertures de ventilation (9, 10), ménagées dans la plage arrière (6) et le porte-modules (4) dans une position relative qui assure un écoulement (8) d'air de refroidissement d'au moins certains des modules électroniques (5), des moyens (16; 20, 21) de fixation libérable du porte-modules (4) sur le véhicule automobile étant prévus, **caractérisé en ce que** le porte-modules (4) est configuré en plaque et **en ce que** les moyens (20, 21) définissent à proximité du bord avant du porte-modules (4) un axe transversal de pivotement (17) qui permet de le rabattre vers le bas après libération d'une fixation amovible (16) située à proximité du bord arrière du porte-modules (4).

2. Agencement selon la revendication 1, **caractérisé en ce que** les ouvertures de ventilation (9, 10) sont prévues dans une partie arrière de la plage arrière (6) et dans une partie avant du porte-modules (4).

3. Agencement selon la revendication 1 ou 2, **caractérisé en ce que** des parois qui délimitent l'espace intermédiaire (7) sont recouvertes d'un matériau d'isolation acoustique (11).

4. Agencement selon l'une des revendications 1 à 3, **caractérisé en ce que** le porte-modules (4) forme en même temps un habillage supérieur du coffre.

5. Agencement selon l'une des revendications 1 à 4, **caractérisé en ce que** la fixation amovible comprend des vis (16) accessibles par le bas.

6. Agencement selon l'une des revendications 1 à 5, **caractérisé en ce que** les moyens qui définissent l'axe de pivotement (17) comprennent des boulons transversaux (21) prévus sur le porte-modules (4) ou sur la structure de base (3) ainsi que des pinces (20) en U ouvertes dans le sens de la longueur, destinées à recevoir cet axe et prévues sur la structure de base (3) ou sur le porte-modules (4).

7. Agencement selon la revendication 6, **caractérisé en ce que** les pinces (20) sont conçues de manière à former une position de blocage active lorsque le porte-modules (4) a été déplacé dans une position d'extrémité avant et une position de pivotement active lorsque le porte-modules (4) a été déplacé dans une position d'extrémité arrière.
